# EUROPEAN PATENT SPECIFICATION

(11) **EP 2 886 206 B1**
(45) Date of publication and mention of the grant of the patent: **18.05.2016**
(21) Application number: 13400041.3
(22) Date of filing: 19.12.2013
(51) Int. Cl.: B05D 5/08, B05D 3/02, B64C 27/48, F16C 33/20

(54) **Method of coating a bushing**
Verfahren zur Beschichtung einer Buchse
Procédé de revêtement d'une douille

(43) Date of publication of application: 24.06.2015
(73) Proprietor: AIRBUS HELICOPTERS DEUTSCHLAND GmbH, 86609 Donauwörth (DE)
(72) Inventor: Gusmini, Roberto, 80335 München (DE); Schmitz, Thomas, 83730 Fischbachau (DE)
(74) Representative: GPI & Associés

(56) References cited:
- EP-A2- 1 024 252
- GB-A- 2 414 425
- US-A1- 2004 081 755

## Description

The invention relates to a method of coating a bushing and more particularly to a method of coating a bushing of a main rotor blade of a helicopter with the features of the preamble of claim 1. The rotor blades of a helicopter are attached to a steel made rotor mast by means of integrated bearing bushes made of steel and mounted by titan made fit bolts. The close contact of steel to steel and/or steel to titan causes contact corrosion due to micro movements in the contact area of an outer surface of the steel bushes with the steel attachment to the main rotor shaft and the associated cracks which occur in the area of rotor attachment.

The document JP2009103194 describes a production method of a cylindrical back plate with a multi-layered sliding member exhibiting friction/abrasion characteristics at high loading usage and at usage under a dry friction condition. The multi-layered sliding member is bonded to the inner surface of the cylindrical back plate by a press-fitting process using a metal pipe having a large thermal expansion.

Relevant coating methods have also been described in the patent applications US2004/0081755A1, EP1024252A2 and GB241425A.

It is an object of the invention to provide an improved method for manufacturing a bushing and more particularly to provide an improved method of manufacturing a bushing of a main rotor blade of a helicopter said bushing preventing contact corrosion. It is a further object of the invention to provide an improved bushing and more particularly an improved bushing of a main rotor blade of a helicopter said improved bushing preventing contact corrosion.

The solution is provided with a method of coating a bushing and more particularly with a method of coating a bushing of a main rotor blade of a helicopter with the features of claim 1.

According to the invention a method of coating a cylindrical bushing and more particularly a method of coating a cylindrical bushing of a main rotor blade of a helicopter comprises the steps of providing a cylindrical bushing with a cylindrical inner surface side with an inner radius rᵣᵢ and a cylindrical outer surface side with an outer radius rᵣₒ and further providing an essentially cylindrical inner liner comprising polytetrafluoroethylene (PTFE), said inner liner having an outer radius rₗₒ ≤ rᵣᵢ and an inner radius rₗᵢ. Still further provided are a bonding agent and a metallic pin with an outer radius rₚₒ ≤ rₗᵢ and a coefficient of thermal expansion higher than the coefficient of thermal expansion of the cylindrical bushing. The bonding agent is applied to the inner liner with PTFE and the inner liner is attached manually by means of the bonding agent to the cylindrical inner surface side of the cylindrical bushing. According to the invention an essentially cylindrical outer liner comprising PTFE is provided, said outer liner having an outer radius roo and an inner radius rₒᵢ ≥ rᵣₒ. Further provided is a carbon fibre reinforced plastic (CFRP)-ring with an inner radius r_{ci} ≥ rₒₒ and a coefficient of thermal expansion lower than the coefficient of thermal expansion of the cylindrical bushing and still further provided is a housing. Bonding agent is applied to the outer liner with PTFE. The outer liner is manually attached by means of the bonding agent on the cylindrical outer surface side of the cylindrical bushing and the CRFP-ring is positioned on the outer liner on the cylindrical outer surface side of the cylindrical bushing. The cylindrical bushing is positioned with the installed CFRP ring in the housing and the metallic pin is installed inside the inner liner on the cylindrical inner surface side of the cylindrical bushing and in the housing. The cylindrical bushing is heated with the installed CFRP ring and the metallic pin in the housing at approx. 135°C during 90 min.. Due to the different thermal expansion coefficients of the cylindrical bushing, the CFRP ring and the metallic pin, both PTFE-liners are evenly pressed against the bushing when the assembly is heated. Subsequently the cylindrical bushing with the installed CFRP ring and the metallic pin is cooled at room temperature during 30. min.. The bonded cylindrical bushing with the installed CFRP ring and the metallic pin are removed from the housing, the cylindrical bushing is separated from the CFRP ring and the metallic pin and the cylindrical bushing is cleaned. Bearing bushes made according to the method of the invention with coated inner and outer surfaces avoid any direct contact of titan bolts to e. g. steel bushings and from the steel bushings with a steel rotor hub and thus avoid contact corrosion. The inventive method allows the manufacturing of a cylindrical bushing equipped with liners comprising PTFE on both, the outer and the inner surface sides. A main advantage of the inventive method is the high quality of the liner application process. Very small tolerances in diameter of 0,01 mm - 0,02 mm, in roundness of 0,02 mm and in angularity of 0,02 mm are continuously achieved. Furthermore the inventive method allows a high grade of design freedom regarding bushing designs with a liner as well on the outer surface side. Another major advantage of the inventive method is the simplicity as well as the savings with regard to time and costs for production of said cylindrical bushing, since both the outer and the inner liners can be applied to the respective inner and outer surfaces of said cylindrical bushing at the same time at high quality with very close tolerances in only one process step.

According to a preferred embodiment of the invention a cylindrical bushing and more particularly a cylindrical bushing of a main rotor blade of a helicopter is provided with a cylindrical inner surface side with an inner radius and a cylindrical outer surface side with an outer radius, said cylindrical inner surface side and the cylindrical outer surface side being each coated with essentially cylindrical liners comprising PTFE according to the inventive method.

According to a further preferred embodiment of the invention the cylindrical bushing is provided with a flange.

According to a further preferred embodiment of the invention the liners comprise PTFE as a thin sheet of glass fibre reinforced PTFE-mesh.

The PTFE-liner may be only on the outer diameter of the bushing.

Preferred embodiments of the invention are outlined by way of example with the following description with reference to the attached drawings.
Figure 1 shows a sequence of overall views of a method of coating a cylindrical bushing according to the invention;
Figure 2 shows a cross sectional view of a tooling for coating a cylindrical bushing according to the invention;
Figure 3 shows a cross sectional view of a detail of the tooling for coating a cylindrical bushing according to Fig. 2, and
Figure 4 shows a cross sectional view of a sample of an attachment with the coated cylindrical bushing according to the invention.

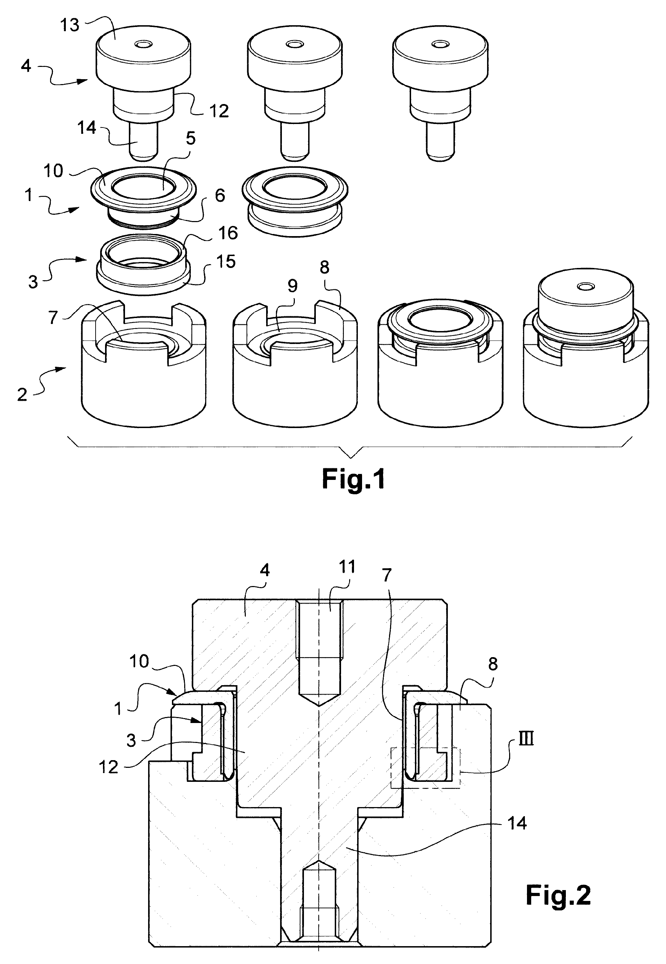

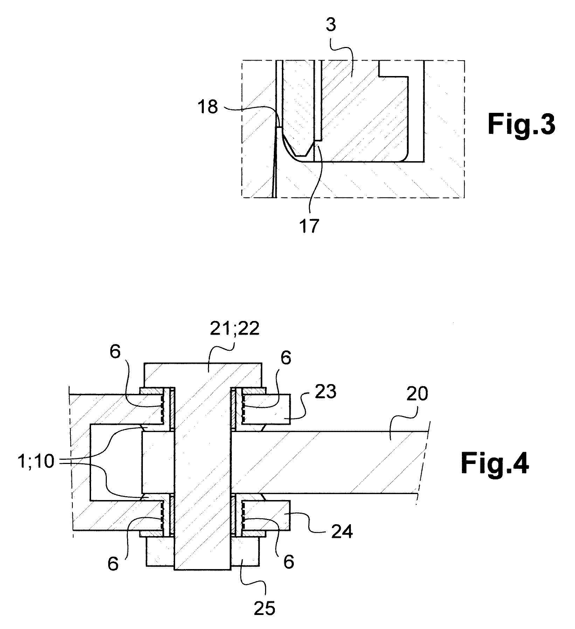

According to Fig. 1 a method for manufacturing a cylindrical bushing 1 for the attachment of main rotor blades (see Fig. 4) to a main rotor shaft (not shown) of a helicopter comprises in a first step the provision of a tooling with a housing 2, a CRFP-ring 3 and an aluminium pin 4. Further provided are a bonding agent (not shown) and an inner liner 5 and an outer liner 6, respectively made of a thin sheet of glass fibre reinforced PTFE-mesh.

The housing 2 is essentially cylindrical with a stepped central opening 7 surrounded by an annular planar contact surface 8 perpendicular to the stepped central opening 7. Radial inside the contact surface 8 a lower flange 9 is provided with a planar surface perpendicular to the stepped central opening 7.

The cylindrical bushing 1 is made of steel with a coefficient of thermal expansion α_{St} = 10 x 10⁻⁶ x K⁻¹. The cylindrical bushing 1 has a cylindrical inner surface side with an inner radius rᵣᵢ, a cylindrical outer surface side with an outer radius rᵣₒ and a flange 10 projecting radially outward from an upper end of the cylindrical bushing 1. The flange 10 extends perpendicularly to a central axis 11 (see Fig. 2) of the cylindrical bushing 1. The flange 10 is coaxial to said central axis 11.

The cylindrical inner liner 5 has an outer radius rₗₒ ≤ rᵣᵢ and an inner radius rₗᵢ. The aluminium pin 4 is essentially cylindrical with a middle section 12 with a radius rₚ ≤ rₗᵢ and a coefficient of thermal expansion αₐₚ = 23,1 x 10⁻⁶ x K⁻¹, i. e. the coefficient of thermal expansion αₐₚ is higher than the coefficient of thermal expansion α_{St} of the cylindrical steel bushing 1. The outer liner 6 has an outer radius rₒₒ and an inner radius rₒᵢ ≥ rᵣₒ. The aluminium pin 4 has an upper section 13 with a radius > than its middle section radius rₚ and the aluminium pin 4 has a lower section 14 with a radius < than its middle section radius rp.

The CFRP-ring 3 has an inner radius r_{ci} ≥ rₒₒ and a coefficient of thermal expansion α_{cr} = 0,1 x 10⁻⁶ x K⁻¹, i. e. the coefficient of thermal expansion α_{cr} is lower than the coefficient of thermal expansion α_{St} of the cylindrical steel bushing 1. The CFRP-ring 3 has a lower bearing surface 15 for abutment against the lower flange 9 of the housing 2 and the CFRP-ring 3 has an upper bearing surface 16 for abutment from below against the flange 10 of the cylindrical bushing 1.

The cylindrical inner surface side of the cylindrical bushing 1 is coated with the inner liner 5. The cylindrical outer surface side of the cylindrical bushing 1 is coated with the outer liner 6.

In a second step the CRFP ring 3 is positioned coaxially with the outer liner 6 on the cylindrical outer surface side of the cylindrical bushing 1.

In a third step the cylindrical bushing 1 with the CRFP ring 3 on the outer liner 6 is inserted coaxially into the stepped central opening 7 of the housing 2. The lower bearing surface 15 of the CFRP-ring 3 is supported by the lower flange 9 of the housing 2.

In a fourth step the aluminium pin 4 is inserted coaxially into the inner liner 5 on the cylindrical inner surface side of the cylindrical bushing 1 and into the stepped central opening 7 of the housing 2 till the upper section 13 of the aluminium pin 4 abuts from above against the flange 10 of the cylindrical bushing 1.

According to Fig. 2, 3 corresponding features are referred to with the references of Fig. 1. The aluminium pin 4 is inserted coaxially with its middle section 12 and its lower section 14 into the stepped central opening 7 of the housing 2 whereby the lower section 14 fits with low tolerances into the lowest part of the stepped central opening 7 of the housing 2 allowing to manufacture a bushing with a concentricity of the inner liner 5 and/or outer liner 6 of 0,02 mm to 0,05 mm relative to a center axis of the bushing. Between the middle section 12 of the aluminium pin 4 and the housing 2 are arranged the cylindrical steel bushing 1 with the inner and the outer liners 5, 6 and the CRFP ring 3 with the CRFP ring 3 between the outer liner 6 on the cylindrical steel bushing 1 and the housing 2. The flange 10 of the cylindrical steel bushing 1 is supported by the planar contact surface 8 of the housing 2 for exact angular positioning of the cylindrical steel bushing 1 relative to the housing 2 with an angular tolerance of the upper bushing flange to the center axis of the bushing up to 0,02 mm - 0,05 mm. The lower bearing surface 15 of the CFRP-ring 3 is supported by the lower flange 9 in the stepped central opening 7. The upper section 13 of the aluminium pin 4 is supported by the flange 10 of the cylindrical steel bushing 1.

The CRFP ring 3 is provided on its inner radius with an inner step 17 for exact longitudinal positioning of the inner liner 5 and/or outer liner 6 with tolerances of up to 0,05 to 0,1 mm. The lower flange 9 of the housing 2 is provided with a flange nose 18 for exact longitudinal positioning of the inner liner 5 and/or outer liner 6 with tolerances of up to 0,05 to 0,1 mm.

According to Fig. 4 two cylindrical bushings 1 are mounted coaxial to a titanium blade attachment bolt 21 with a bolt head 22 for the attachment of a main rotor blade 20 to the main rotor shaft (not shown) of the helicopter. An upper one of the two cylindrical bushings 1 coaxially holds an upper mast flange 23 made of steel to the titanium blade attachment bolt 21. The main rotor blade 20 is in contact with the flange 10 of the upper one of the two cylindrical bushings 1. A lower one of the two cylindrical bushings 1 is coaxially mounted between a lower mast flange 24 made of steel and the titanium blade attachment bolt 21 and the main rotor blade 20 is again in contact with the flange 10 of the lower one of the two cylindrical bushings 1. A blade attachment bolt nut 25 fixes the two cylindrical bushings 1, the upper and lower mast flanges 23, 24 and the main rotor blade 20 to the titanium blade attachment bolt 21.

Outer liners 6 made of a thin sheet of glass fibre reinforced PTFE-mesh are provided on the two cylindrical steel bushings 1 coaxially to the titanium blade attachment bolt 21 and in contact with the upper and lower mast flanges 23, 24. Inner liners 5 made of a thin sheet of glass fibre reinforced PTFE-mesh are provided on the two cylindrical steel bushings 1 coaxially to and in contact with the titanium blade attachment bolt 21.

### Reference List

- 1: cylindrical bushing
- 2: housing
- 3: CRFP-ring
- 4: aluminium pin
- 5: inner liner 5
- 6: outer liner
- 7: central opening
- 8: planar contact surface
- 9: lower flange
- 10: flange
- 11: central axis
- 12: middle section
- 13: upper section
- 14: lower section
- 15: lower bearing surface
- 16: upper bearing surface
- 17: inner step
- 18: flange nose
- 19:
- 20: main rotor blade
- 21: titanium blade attachment bolt
- 22: bolt head
- 23: upper mast flange
- 24: lower mast flange
- 25: blade attachment bolt nut

## Claims

1. A method of coating a cylindrical bushing (1) comprising the steps as follows:
- Providing a cylindrical bushing (1) with a cylindrical inner surface side with an inner radius rᵣᵢ and a cylindrical outer surface side with an outer radius rᵣₒ,
- Providing an cylindrical inner liner (5) comprising PTFE, said inner liner (5) having an outer radius rₗₒ ≤ rᵣᵢ and an inner radius rₗᵢ,
- Providing a bonding agent and a metallic pin (4) with an outer radius rₚₒ ≤ rₗᵢ and a coefficient of thermal expansion higher than the coefficient of thermal expansion of the cylindrical bushing (1),
- Applying the bonding agent to the inner liner (5) with PTFE, and
- Attaching manually the inner liner (5) by means of the bonding agent to the cylindrical inner surface side of the cylindrical bushing (1),
**characterized by**
- Providing an cylindrical outer liner (6) comprising PTFE, said outer liner having (6) an outer radius rₒₒ and an inner radius rₒᵢ ≥ rᵣₒ,
- Providing a CFRP-ring (3) with an inner radius r_{ci} ≥ rₒₒ and a coefficient of thermal expansion lower than the coefficient of thermal expansion of the cylindrical bushing (1),
- Providing a housing (2),
- Applying of bonding agent to the outer liner (6), and
- Attaching manually the outer liner (6) by means of the bonding agent to the cylindrical outer surface side of the cylindrical bushing (1),
- Positioning of the CRFP-ring (3) on the outer liner (6) on the cylindrical outer surface side of the cylindrical bushing (1),
- Positioning of the cylindrical bushing (1) with the installed CFRP ring (3) in the housing (2),
- Installing the metallic pin (4) inside the inner liner (5) on the cylindrical inner surface side of the cylindrical bushing (1) and in the housing (2),
- Heating the cylindrical bushing (1) with the installed CFRP ring (3) and the metallic pin (4) in the housing (2) at approx. 135°C during 90 min.,
- Cooling the cylindrical bushing (1) with the installed CFRP ring (3) and the metallic pin (4) at room temperature during 30. min. and
- Removing the bonded cylindrical bushing (1) with the installed CFRP ring (3) and the metallic pin (4) from the housing (2),
- Clearing the cylindrical bushing (1) from the CFRP ring (3) and the metallic pin (4) and cleaning the cylindrical bushing (1).

2. The method of claim 1, wherein the cylindrical bushing (1) is for a main rotor of a helicopter.

## Patentansprüche

1. Verfahren zum Beschichten einer zylinderförmigen Buchse (1) mit den folgenden Schritten:
- Bereitstellen einer zylinderförmigen Buchse (1) mit einer zylinderförmigen Innenoberflächenseite mit einem inneren Radius rᵣᵢ und einer zylinderförmigen äußeren Oberflächenseite mit einem äußeren Radius rᵣₒ,
- Bereitstellen einer inneren Auskleidung (5), die Polytetrafluorethylen (PTFE) enthält, wobei die innere Auskleidung (5) einen äußeren Radius rₗₒ ≤ rᵣᵢ und einen inneren Radius rₗᵢ aufweist,
- Bereitstellen eines Haftmittels und eines Metallstifts (4) mit einem äußeren Radius rₚₒ ≤ rₗᵢ und einem thermischen Ausdehnungskoeffizienten, der größer ist als der thermische Ausdehnungskoeffizient der zylinderförmigen Buchse (1),
- Aufbringen des Haftmittels auf der inneren Auskleidung (5) mit Polytetrafluorethylen (PTFE), und
- manuelles Befestigen der inneren Auskleidung (5) mit dem Haftmittel an der inneren zylinderförmigen Oberflächenseite der zylinderförmigen Buchse (1),
**gekennzeichnet durch**
- Bereitstellen einer zylinderförmigen äußeren Auskleidung (6) mit Polytetrafluorethylen (PTFE), wobei die äußere Auskleidung (6) einen äußeren Radius rₒₒ und einen inneren Radius rₒᵢ ≥ rᵣₒ aufweist,
- Bereitstellen eines carbonfaserverstärkten Kunststoffrings (3) (CFK-Ring) mit einem inneren Radius r_{ci} ≥ rₒₒ und mit einem thermischen Ausdehnungskoeffizienten, der kleiner ist als der thermische Ausdehnungskoeffizient der zylinderförmigen Buchse (1),
- Bereitstellen eines Gehäuses (2),
- Anbringen des Haftmittels auf der äußeren Auskleidung (6) und
- manuelles Befestigen der äußeren Auskleidung (6) mit dem Haftmittel an der zylinderförmigen Außenseite der zylinderförmigen Buchse (1),
- Positionieren des carbonfaserverstärkten Kunststoffrings (CFK-Ring) (3) auf der äußeren Auskleidung (6) auf der zylinderförmigen äußeren Oberflächenseite der zylinderförmigen Buchse (1),
- Positionieren der zylinderförmigen Buchse (1) mit dem installierten carbonfaserverstärkten Kunststoffring (CFK-Ring) (3) in dem Gehäuse (2),
- Installieren des Metallstifts (4) innerhalb der inneren Auskleidung (5) auf der zylinderförmigen inneren Oberflächenseite der zylinderförmigen Buchse (1) und in dem Gehäuse (2),
- Aufheizen der zylinderförmigen Buchse (1) mit dem installierten carbonfaserverstärkten Kunststoffring (CFK-Ring) (3) und dem Metallstift (4) in dem Gehäuse (2) auf etwa 135 °C während 90 min,
- Abkühlen der zylinderförmigen Buchse (1) mit dem installierten carbonfaserverstärkten Kunststoffring (CFK-Ring) (3) und des Metallstifts (4) auf Raumtemperatur während 30 min, und
- Entfernen der geklebten zylinderförmigen Buchse (1) mit dem installierten carbonfaserverstärkten Kunststoffring (CFK-Ring) (3) und dem Metallstift (4) aus dem Gehäuse (2),
- Abtrennen der zylinderförmigen Buchse (1) von dem carbonfaserverstärkten Kunststoffring (CFK-Ring) (3) und von dem Metallstift (4), und Säubern der zylinderförmigen Buchse (1).

2. Verfahren nach Anspruch 1, wobei die zylinderförmigen Buchse (1) für einen Hauptrotor eines Hubschraubers bestimmt ist.

## Revendications

1. Méthode de revêtement d'un palier cylindrique (1) comprenant les étapes suivantes :
- Produire un palier cylindrique (1) avec une face intérieure cylindrique de rayon intérieur rᵣᵢ et une face extérieure cylindrique de rayon extérieur rᵣₒ,
- Produire une garniture intérieure (5) cylindrique en polytétrafluoroéthylène (PTFE), ladite garniture intérieure (5) ayant un rayon extérieur rₗₒ ≤ rᵣᵢ et un rayon intérieur rₗᵢ,
- Produire un adhésif et une broche métallique (4) de rayon extérieur rₚₒ ≤ rₗᵢ et dont le coefficient de dilatation thermique est supérieur au coefficient de dilatation thermique du palier cylindrique (1),
- Appliquer l'adhésif sur la garniture intérieure (5) avec du PTFE, et
- fixer manuellement la garniture intérieure (5) au moyen de l'adhésif à la face intérieure cylindrique du palier cylindrique (1),
**Caractérisée par**
- Produire une garniture extérieure (6) cylindrique en PTFE, ladite garniture extérieure (6) ayant un rayon extérieur rₒₒ et un rayon intérieur rₒᵢ ≤ rᵣₒ,
- Produire un anneau en plastique renforcé de fibres de carbone (3) de rayon intérieur r_{ci} ≤ rₒₒ et dont le coefficient de dilatation thermique est inférieur au coefficient de dilatation thermique du palier cylindrique (1),
- Produire un logement (2),
- Appliquer un adhésif sur la garniture extérieure (6), et
- Fixer manuellement la garniture extérieure (6) au moyen de l'adhésif à la face extérieure cylindrique du palier cylindrique (1),
- Positionner l'anneau en plastique renforcé de fibres de carbone (3) sur la garniture extérieure (6) sur la face extérieure cylindrique du palier cylindrique (1)
- Positionner le palier cylindrique (1) avec l'anneau en plastique renforcé de fibres de carbone (3) installé dans le logement (2),
- Installer la broche métallique (4) à l'intérieur de la garniture intérieure (5) sur la face intérieure cylindrique du palier cylindrique (1) et dans le logement (2),
- Chauffer le palier cylindrique (1) avec l'anneau en plastique renforcé de fibres de carbone (3) installé et la broche métallique (4) dans le logement (2) à 135 °C pendant 90 minutes environ, et
- Refroidir le palier cylindrique (1) avec l'anneau en plastique renforcé de fibres de carbone (3) installé et la broche métallique (4) à température ambiante pendant 30 minutes et
- Retirer le palier cylindrique (1) collé avec l'anneau en plastique renforcé de fibres de carbone (3) installé et la broche métallique (4) depuis le logement (2),
- Libérer le palier cylindrique (1) de l'anneau en plastique renforcé de fibres de carbone (3) et la broche métallique (4) et nettoyer le palier cylindrique (1).

2. Méthode de la revendication 1, dans laquelle le palier cylindrique (1) est destiné à un rotor principal d'hélicoptère.
